## Europäisches Patentamt
## European Patent Office
## Office européen des brevets

(11) Publication number: **0 495 937 A1**

## EUROPEAN PATENT APPLICATION
### published in accordance with Art. 158(3) EPC

(21) Application number: **91911661.6**

(22) Date of filing: **03.07.91**

(86) International application number:
**PCT/ES91/00039**

(87) International publication number:
**WO 92/01630 (06.02.92 92/04)**

(51) Int. Cl.5: **C01F 11/18, C01F 11/38, C05C 1/00**

(30) Priority: **20.07.90 ES 9001964**

(43) Date of publication of application:
**29.07.92 Bulletin 92/31**

(84) Designated Contracting States:
**BE DE FR GB IT NL**

(71) Applicant: **PROINSUR PROMOCIONES INDUSTRIALES DEL SUR, S.A.**
**P de la Castellana, 140-9 E**
**E-28046 Madrid(ES)**

(72) Inventor: **PIEDRAFITA PALACIOS, Adolfo**
**P de la Castellana, 140-9E**
**E-28046 Madrid(ES)**

(74) Representative: **Urizar Anasagasti, José Antonio**
**Doctor Fleming, 43**
**E-28036 Madrid(ES)**

(54) **CONTINUOUS PRODUCTION OF FERTILIZING SALTS WITH DERIVATIVES OF STRONTIUM AND GYPSUM.**

(57) Method for obtaining fertilizing salts and derivatives of strontium, by wet process, starting from mineral material such as strontium sulphate which is reacted with ammonium carbonate in excess. This reaction is carried out continuously and with counter-current flows of reagents. This excess of ammonium carbonate used is recovered in order to recycle it in the process and to isolate the ammonium sulphate which may be treated continuously with a lime carbonate or oxide, recovering the gases evolved by the reaction and obtaining as final product lime sulphate (gypsum). In a second phase, strontium carbonate obtained is continuously reacted with nitric acid in order to obtain strontium nitrate, part of which is carbonated with gases ($CO_2$ and $NH_3$) producing a precipitate of strontium carbonate and a solution of ammonium nitrate.

EP 0 495 937 A1

By the process of this patent, fertilizer salts, derivates of strontium and calcium sulphate are obtained in a production chain and more concretely: ammonium sulphate in solution and ammonium nitrate, strontium carbonate with a 95 to 99%. Using as principal raw materials ammonia, carbon dioxide, nitric acid, clorhidric acid, the mineral celestite (strontium sulphate) and calcium oxide, hidroxide or carbonate.

The strontium carbonate of the given degree of purity has the following applications : purification in the zinc electrolysis, production of special glasses, mainly screens of cathode-ray tubes for televisions and monitors, production of ferrites (permanent ceramic magnets) and as raw material for the obtention of other strontium salts such as nitrate, chromate or chloride.

The current procedures in use for the obtention of strontium carbonate starting from mineral (strontium sulphate) are:

The standard procedure consists in the chemical reduction of strontium sulphate known by the name of black-ash. This reduction takes place in a kiln, at an approx. temperature of 1.100 - 1.200$\underline{o}$, which is fed with coke giving the reaction:

$SrSO4 + 2C --->SrS + 2C02$

The sulphide obtained in this way is solubilized in water. The obtained solution is then carbonated according to the folowing reaction:

$SrS + H2O + CO2--->SrCO3 + H2S$

This procedure is now being questioned, because it needs a high investment for the production facilities.

Another serius inconvenience is the production of polluting waste products like the effluents from the carbonatation and mainly hydrogen disulphyde ($H^2S$) produced in huge quantities, and the elimination of which requires very costly investments of difficult functioning. Finally, the obtained product is impurified by insoluble sulphur salts.

The second known procedure, but less extended, consists in using the reaction in wet medium at a low temperature of approx. 100$\underline{o}$C in which the reactant is sodium carbonate. This procedure is known by the name of soda-ash and is based on the reaction:

$SrSO4 + Na2CO3 ---> SrCO3 + Na2SO4$

This method produces as waste product a solution of sodium sulphate. On the other hand the quality of the obtained product is restricted by the quality of the celestite used as raw material, and also by the impurification produced by the sodium salts.

Notwithstanding, this wet process requires smaller investments and produces less environmental pollution.

The method object of this patent proceeds according to the following phases and with the sequencies of reactions under conditions which are described for each phase:

First.- Mineral treatment.

The raw material is subjected to a fine grinding so that particles of a size of 1 to 50 microns are formed.

The purificating reactors are fed with clorhidric acid at concentrations from 10 to 33%, afterwards the ground mineral is dosified, the mixture is stirred and heated up to 80 - 100$\underline{o}$C during approx. one hour, during which the main contents of impurities in the mineral like iron and carbonates are attacked and solubilized. Later the mass is filtered and washed with water obtaining a purified mineral.

Second.- Continuous carbonatation of the purified mineral.

This phase uses the continuous counter-current reaction of the purified celestite (strontium sulphate) and the ammonium carbonate produced by CO and NH , according to the following reaction:

$CO2 + NH3 + H2O --->(NH4)2CO3$
$SrSO4 + H2O + (NH4)2CO3--->SrCO3 + (NH4)2SO4 + (Ex)(NH4)2CO3 + Insolubles$

As insolubles are considered those elements insoluble in HCL and formed principally by original impurities of the mineral, which are non-transformable, and sulphates not coverted in the reaction.

This continuous reaction process is characterized by effecting the reaction in multiple phases and with counter-current circulation of reactants, for which it is necessary to intercalate between each phase a solid-liquid separator, which can be static or dynamic, and from which liquids and concentrated slurries flow in opposite directions. For a better comprehension of the functioning we will describe the continuous process with, for example, three phases.

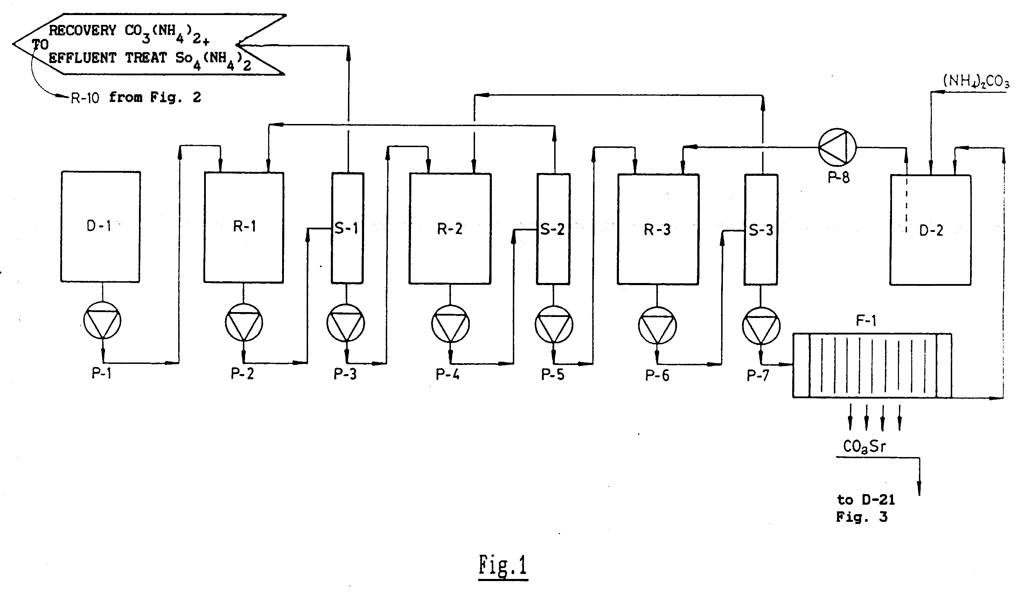

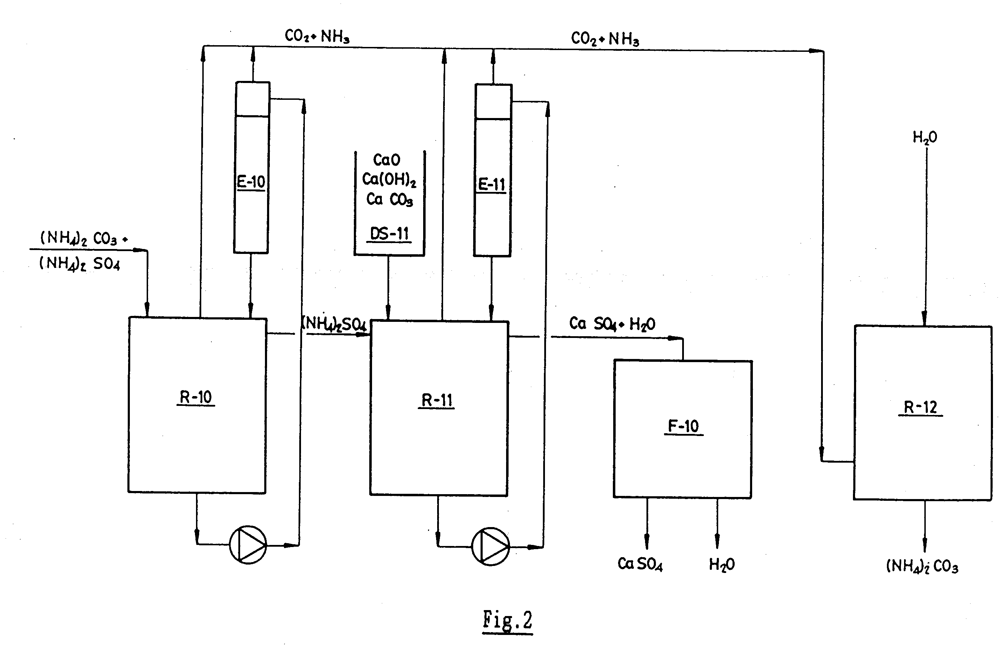

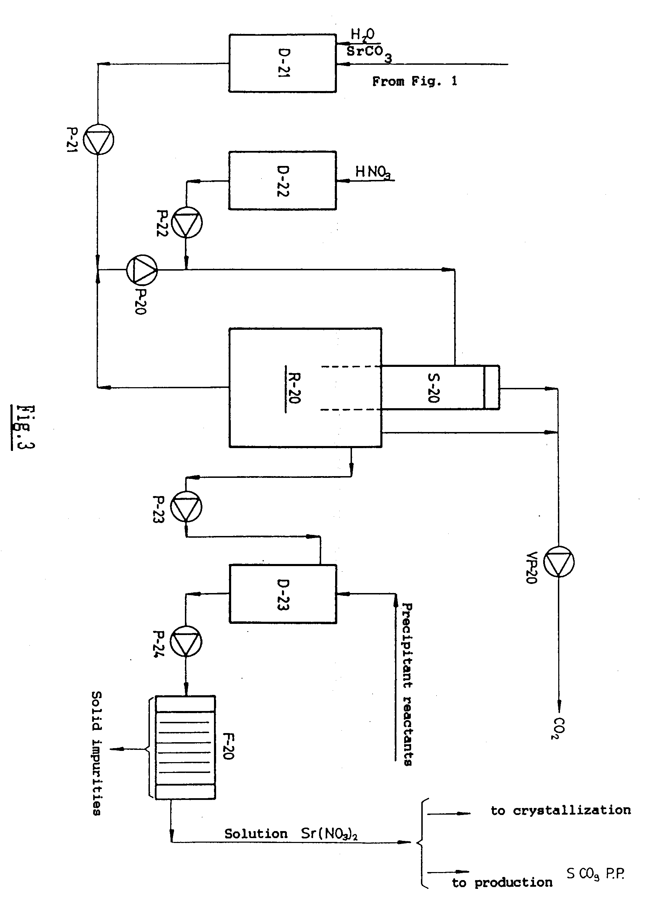

The process follows the diagram of fig. 1 and consists of two or more reactors.

The first of them, R-1, is fed with purified celestite from the slurry preparation tank D-1 and with a solution flowing from the separator S-2.

The first reactor R-1, is thermostatized at the reaction temperature and the first stage of the conversion occurs.

After a pre-set time of reaction the product flows from the reactor R-1 into the separator S-1, which separates the solids from the solutions.

The solution contains ammonium sulphate, as well as the excess of ammonium carbonate and is sent to recovery and treatment of effluents. The solids are formed by a mixture of non-reacted strontium sulphate as well as already obtained strontium carbonate.

These solids are fed into reactor R-2 which receives also the solution coming from the separator S-3.

In this reactor R-2, as well as in R-1, the conditions of temperature and residence time are mantained, and in it happens another stage of the reaction which converts part of the non-reacted strontium sulphate in R-1 into strontium carbonate.

Likewise, in continuous form, from R-2 flows the reaction mass to feed the separator S-2, obtaining continuously a separation of solids from solutions.

The solution feeds the reactor R-1 whilst the solids are sent to reactor R-3 and its composition at the entry of this reactor is mainly strontium carbonate and part of the non-converted strontium sulphate in the anterior reactors. The solution which feeds this reactor is fresh ammonium carbonate, so that the conversion conditions in this reactor displace totally the equilibrium towards the formation of strontium carbonate, because there is no ammonium sulphate in the fresh solution and, on the other hand, under these conditions there exists a great excess of ammonium carbonate in relation to the necessary stoichiometry to transform the rests of strontium sulphate which are fed into this reactor.

The mass of this reaction from reactor R-3 is fed into separator S-3 from which the outgoing solution is fed into the reactor R-2 and the concentrated slurries formed practically totally by strontium carbonate, are fed into a filter from which the mother-solution is separated and the carbonate is washed before being fed to the dyer.

The solutions, very rich in ammonium carbonate, are reintegrated to the initial solution tank D-2.

The described multi-reaction is effected under the following and non-limitative conditions:

Reaction temperature between 50 and $100 \underline{o}$C. Solid/liquid ratio: 1/3 to 1/10. Manometric pressure of 0,5 to 1,5 Kg./cm$^2$. Excess of reactant 20 to 100%. Under this conditions and according to the results of the tests, a conversion of 99.8% is obtained in relation to the initial strontium sulphate. Depending upon the quality of the mineral, the quality of the obtained strontium carbonate in this phase may reach 95 to 97%.

The described stage is completed with the recovery of the excess reactant (ammonium carbonate) as well as the treatment of the effluent, ammonium sulphate, as the following description explains and is summarized in diagram nr. 2.

Third.- Recovery of reactant (NH4)2CO3 and treatment of ammonium sulphate.

The solution of the reaction coming from S-1 (as per diagram nr.1) is fed to the reactor R-10 (as per diagram nr.2) which has a degasification unit.

The solution is heated in R-10 up to the degasification temperature, the liquid is recirculated through the rotating thin-film degasificator, where the practical totality of the ammonium carbonate is displaced into its components, $CO^2$, $NH^3$ and steam.

This degasification is partially produced in the reactor R-10 and is completed in the degasificator E-10, until the solution contains only ammonium sulphate.

This solution is discharged from reactor R-10 and enters the reactor R-11, where through the dosificator DS-11 calcium oxide, hidroxide or carbonate is dosified, then one of the following reactions takes place (depending upon the calcium compound which is fed):

(NH4)2SO4 + CaO ---> CaSO4 + 2NH3 + H2O
(NH4)2SO4 + Ca(OH)2 ---> CaSO4 + 2NH3 + 2H2O

(NH4)2SO4 + CaCO3 ---> CaSO4 + 2NH3 + CO2 + H2O

The reactor R-11 has attached a degasificator E-11 exactly as in the previous stage. This degasificator, of descending thin-film type, incorporating an inner mechanical rotor, causes the out-flow of ammonia, carbon dioxide and steam. On the other hand the type of degasificator used avoids the known problems of adherences, which are typical of the calcium sulphate.

This gaseous flow of $CO^2$ and $NH^3$ and steam joins the gaseous flow of the same components $CO^2$, $NH^3$ and steam generated in R-10 and E-10, then both flows are guided to a system of absorption towers, R-12, generating ammonium carbonate for recycling.

The dispersion of calcium sulphate produced in R-11 is pumped to the rotative filter F-10, where the solid (calcium sulphate) and residual waters are separated.

The process is characterized by the recovery of ammonium carbonate reactant, as well as by the recovery of ammonia contained in the ammonium sulphate generated in the reaction of formation of stromtium carbonate, transforming the aforementioned ammonium sulphate into calcium sulphate, an inert product, non pollutant and with possible industrial use as gypsum.

The conditions to carry out this process are:

Temperatura in R-10 and E-10 between 80 -100ºC.

Pressure in R-10 and E-10 is of 760 -200 mm Hg absolutes

Temperature in R-11 and E-11 between 80 - 130ºC

Pressure in R-11 and E-11 is of 360 - 1500 mm Hg absolutes

Fourth.- Continuous production of strontium nitrate.

This phase is operated according to diagram nr. 3. With the strontium carbonate obtained in the first phase, a slurry is prepared with a solid/liquid concentration of 800 to 1200 g/l in the tank D-21 and through the pump P-21 the slurry is dosified into the intake of the recirculation pump P-20 of the reactor, at a flow rate which will depend upon the capacity of reactor R-20.

The nitric acid from tank D-22 is dosified by the pump P-22 into the impulsion of the recirculation circuit. The flow rate of this pump P-22 will depend on the signal of the pH-meter installed in the reactor, in function of the pre-set operating instructions. At this point of the acid dosification starts the following reaction:

$SrCO^3$ + $2HNO^3$ ---> $CO^2$ + $Sr(NO^3)^2$ + $H^2O$

As can be seen, during the formation of the strontium nitrate there is an emission of $CO^2$ gas which joins the recirculation liquid and is separated in the degasification tower S-20, where it is aspirated by the vacuum pump VP-20 and sent to recovery. The solution of the reaction drops down the tower walls into the reactor R-20 to complete the transformation. The reacted solution is extracted from the upper part of the reactor in function of the signal from the level indicator transmitter which acts upon pump P-23 and is sent to the impurities precipitation tank D-23.

From the precipitation tank and through the pressure pump P-24, the solution with the solids in suspension is pumped into the filter F-20 where the solid impurities are separated and the purified and clarified strontium nitrate solution can be sent to:

1.- Continuous vacuum-crystallization facility, where $Sr(NO^3)^2$ crystals are obtained, which, separated from the mother liquor by centrifugation, pass to the drying equipment from where it is packed for selling.

2.- Utilizacion of the $Sr(NO^3)^2$ solution as raw material for the following stage of production.

The obtained solution has a concentration of approx. 570 g/l and the operating conditions are the following:

Reaction temperature between 50 and 80ºC.

Pressure 400 Torr

Fifth.- Obtention of precipitated $SrCO^3$

The solution obtained in the previous stage, at a concentration of 570 g/l, is fed into the second carbonatation reactor into which $NH^3$ and $CO^2$ in gaseous phase are fed, which with the water of the solution form ammonium carbonate which reacts instantly with the strontium nitrate present in the solution forming a white precipitate of strontium carbonate.

The reaction proceeds as follows:

$$Sr(NO_3)_2 + H_2O + CO_2 + 2NH_3 \longrightarrow SrCO_3 + 2NH_4NO_3$$

The operating conditions are:

Temperature between 30 an 100 °C

Pressures between O to 1 Kg/cm$^2$

The precipitated strontium carbonate forms in the reaction mass a dispersion from which the solids ($SrCO^3$) are separated by filtration, where as well the washing with treated water takes place to eliminate as much as possible the remains of the solution. Later, the moist solids discharged by the filter press go to the drying and packing facility.

The strontium carbonate quality obtained in this stage may be higher than 99%, depending on the grade of purification effected on the strontium nitrate solution.

The liquids separated in the filter press are formed by a $NH_4NO_3$ solution at a concentration of approx. 500 g/l, which may be used directly as fertilizer or go to a crystallizing facility for its obtention in solid form.

Depending on market demand, with this process products of technical quality may be obtained at lower cost and high purity products exempt from sulphur compounds.

For a better comprehension of the procedure object of this invention, an example is described which indicates in a general manner several phases of the process.

EXAMPLE

Facility like the one described in diagram nr.1. The tank D-1 of a capacity of 12 liters with agitator is used to prepare a slurry of purified mineral and water at a solid/liquid concentration of 800 g/l.

| Composition of the purified mineral: | |
|---|---|
| SrSO4 | 96,05% |
| BaSO4 | 1,88% |
| CaSO4 | 0,81% |
| MgSO4 | 0,02% |
| Fe2O3 | 0,017% |
| AL2O3 | 0,05% |
| SiO2 | 0,98% |
| Na | 0,19% |

The tank D-2 is used to prepare a solution of ammonium carbonate starting from ammonium bicarbonate and ammonia, according to the reaction:

$$NH_4HCO_3 + NH_3 \text{ ---- } (NH_4)_2CO_3$$

until a concentration of 265 g/l is reached.

The reactor R-1 (first stage of the reaction) with a reaction volume of 5 liters, with agitator and heating jacket, built of stainless steel, is fed on one side through the peristaltic pump P-1 with a mineral slurry at 800 g/l and at a flow of 1,4 l/h, on the other side with a solution coming from the solid/liquid separator S-2 with a flow of 4,5 l/h, forming inside the reactor a light dispersion at solids concentration of 190 g/l, which is discharged by the pump P-2 to feed the separator S-1 with a flow of 5,9 l/h.

From this separator, by the pump P-3, the reactor R-2 (of identical characteristics as R-1) is fed with a slurry at 800 g/l and a flow of 1,4 l/h, to which comes the solution from the separator S-3 at a flow of 4,5 l/h. The dispersion formed in this reactor is discharged by the pump P-4 with a flow of 1,4 l/h, to feed the reactor R-3 (identical characteristics as R-1 and R-2) to which is fed the pure ammonium carbonate solution at a concentration of 265 g/l, and where the reaction is totally completed. The reaction of the mass is discharged by the pump P-6 with a flow of 5,9 l/h and is fed to the separator S-3 from where the liquid phase returns to reactor R-2 and the thick phase of the slurries consisting almost totally of strontium carbonate, are pumped by the pump P-7 to the filter F-1, where they are separated from the solution and washed with water. A 896 gr./h. production of strontium carbonate is achieved, of the following characteristics:

| | |
|---|---|
| SrCO3 | 95,89% |
| BaCO3 | 1,90% ÷ |
| CaCO3 | 0,72% |
| MgCO3 | 0,07% |
| Fe2O3 | 0.006% |
| AL2O3 | O,009% |
| HCL Ins. | l,20% |
| Na2CO3 | O,2% |

The operating conditions at which this reaction has been verified are a temperature between 60 - 80ₒC and a pressure between 0 - 1 Kg/cm². 

The solution coming from the separator S-1 with a flow of 4,5 l/h. consists of ammonium carbonate at a concentration of 105 g/l and ammonium solphate at a concentration of 142 g/l, goes to the degasification reactor to recover (NH4)2CO3 as its components CO2 and NH3.

The ammonium solphate solution at 142 g/l reacts with Ca(OH)2 recovering 90% of NH3.

With the strontium carbonate obtained, a thick slurry is prepared to feed a reactor of design and materials adequate for the operating conditions where it reacts with nitric acid in the following conditions:

Temperature 50 - 80ₒC

Pressure 400 Torr

The necessary quantity of HNO3 at 58% for the reaction is 1,3 Kg/h. To the solution of reaction are added depurative reactants in function of the desired final product quality and it is passed through a filter where the parts insoluble in HNO3 are retained, both those originating from the carbonate and those produced by precipitation of impurities, leaving finally a clarified solution at a concentration of approximately 570 g/l and the amount of Sr(NO3)2 obtained is 1,23 Kg/h with the following assay:

| | |
|---|---|
| Sr(NO3)2 | 99,38% |
| Ba | 0,14% |
| Ca | 0,0182% |
| Mg | 0,0002% |
| Fe | 0,0010% |
| Al | 0,0010% |
| Na | 0,093% |

The aforementioned solution at 570 g/l is fed into the precipitation reactor of special design, provided with agitator, a heating system and gas diffusion for the dosification of NH3 and CO2 until the total precipitation of the solution is reached. The reaction mass is filtered.

The saparated liquid consist of a solution of NH4NO3 at a concentration of 505 g/l and the solids, after being washed with treated water and dired have the following chemical composition:

| | |
|---|---|
| SrCO3 | 99,35% |
| BaCO3 | 0,28% |
| CaCO3 | 0,10% |
| MgCO3 | 0,03% |
| Fe2O3 | 0,0015% |
| Al2O3 | 0,004% |
| Na2CO3 | 0,23% |

It must be well understood that the thechnician in this matter may introduce modifications in the form of execution which have just been described as an example as long as such modifications do not go beyond the scope of the invention. To summarize, the present patent covers the following claims:

## Claims

1. Continuous obtention of fertilizer salts together with strontium and calcium derivates, by a wet process, in various phases, characterized in that according to the same, a continuous reaction with a counter-current reactant flow and in a closed circuit is produced, leading to a maximum yield of the reactants, and that the conversion conditions are displaced to the final reactor of the outflow of the product, achieving thereby the maximum quality in this metathesis reaction.

2. Continuous obtention of fertilizer salts with strontium and gypsum derivates, according to previous claim, characterized in that in the third phase it allows the recovery of the reactive ( $(NH4)2CO3$) and recovery of the ammonia from the ammonium sulphate, obtaining as a byproduct calcium sulphate with which gypsum may be produced, and that these aspects affect the profitability of the process.

3. Continuous obtention of fertilizer salts with strontium and gypsum derivates, according to previous claims, characterized in that in the fourth phase the continuous reaction for the obtention of strontium nitrate is carried out in closed circuit, with recovery of $CO2$ and with the possibility of precipitating the soluble impurities, which makes it possible to obtain a high quality strontium nitrate which affects the final crystalized product as well as the precipitated strontium carbonate.

4. Continuous obtention of fertilizer salts with strontium and gypsum derivates, according to previous claims, characterized in that in the fifth phase, a high quality strontium carbonate is obtained, starting from the strontium nitrate solution, which upon carbonatation with $NH3$ and $CO2$ gases, produces a solution of ammonium nitrate with the maximum concentration, which permits to reach lower energy costs for its crystallization.

The operating conditions, as a whole, take place at low pressure and temperatures, and the reactants as well as the intermediate and final products do not cause important corrosion problems.

5. "CONTINUOUS OBTENTION OF FERTILIZER SALTS WITH STRONTIUM AND GYPSUM DE-RIVATES".

**Amended claims**

1. (Claim is unchanged). Continuous obtention of fertilizer salts together with strontium and calcium derivates, by a wet process, in various phases, characterized in that according to the same, a continuous reaction with a counter-current reactant flow and in a closed circuit is produced, leading to a maximum yield of the reactants, and that the conversion conditions are displaced to the final reactor of the outflow of the product, achieving thereby the maximum quality in this metathesis reaction.

2. (Claim is unchanged). Continuous obtention of fertilizer salts with strontium and gypsum derivates, according to previous claim, characterized in that in the third phase it allows the recovery of the reactive ( $(NH4)2CO3$) and recovery of the ammonia from the ammonium sulphate, obtaining as a byproduct calcium sulphate with which gypsum may be produced, and that these aspects affect the profitability of the process.

3. (Claim is changed). Continuous obtention of fertilizer salts with strontium and gypsum derivates, according to previous claims, characterized in that in the fourth phase, the continuous reaction for the obtention of strontium nitrate is carried out in closed circuit, by means of a reactor with recirculation pump and degasification tower with foam separator, the dosification of the $SrCO3$ slurry is carried out in the intake of the recirculation pump and the dosification of $HNO3$ in the impulsion, and the flow rate of $HNO3$ is regulated in function of the pH signal of the solution inside the reactor; from the upper part of the degasification tower $CO2$ is extracted by means of a vacuum pump in order to be recovered; to the solution of reaction reactants can be added in order to precipitate soluble impurities in the nitrate for which a high quality nitrate can be obtained that can affect both the final crystallized product and the precipitated strontium carbonate.

4. (Claim is changed). Continuous obtention of fertilizer salts with strontium and gypsum derivates, according to previous claims, characterized in that in the fifth phase, a high quality strontium carbonate is obtained, starting from the strontium nitrate solution, which is carbonated with gases $NH3$ and $CO2$ and taking advantage of the reaction heat in order to provoke evaporation of the solution while it is descending from the outer part of the reactor, which allows reduction in energy costs in the concentration of $NH4NO3$. The process is carried out using low pressures and temperatures which avoid important corrosion problems both of reactants and of the intermediate and final products.

**5.** (Claim is new). Continuous obtention of fertilizer salts with strontium and gypsum derivates, according to claim 4, characterized in that the carbonatation of the strontium nitrate solution with gases NH3 and CO2 is carried out in a reactor of vertical tubular type with recirculation pump and dosification of gases in the lower part by means of microporous diffusers and by placing the dosification of NH3 on that of CO2, being the height of the reactor the appropriate for a perfect absorbtion of the gases. The discharge of the reaction mass is carried out in the outer part of the reactor tube on a sedimentary deposit with compartments from which the recirculation pump aspirates a solution with fine particles of SrCO3 and its impulsion enters from the bottom of the reactor, SrCO3 is extracted from the lower part of the sedimentary deposit, and the major part of the NH4NO3 solution goes out from the spillway of the sedimentary deposit.

**Brief statement of amendment under article 19(1)**

In concept of amending the claims of the above-identified international application, and based on the International Search Report mailed October 16, 1991, attached to this latter are new substitute pages 15 and 16 for pages 15 and 16 of the claims of the original application.

The documents cited in the International Search Report are classified under category "A", which define the state of the art, and are not considered to be particularly pertinent. However, the applicant wishes to amend some of the claims in order to specify with more detail the subject matter of the invention.

Claims 1 and 2 are not modified. Claim 3 is modified and describes with more detail the continuous reaction for the obtention of strontium nitrate. Claim 4 is modified and specifies with more detail the characteristics of the process in order to obtain strontium carbonate and the advantageous use of the heat of the reaction. Claim 5 is new and specifies the type of the reactor in which the carbonatation of the strontium nitrate solution of claim 4 is carried out, as well as the process in different parts of said reactor.

RECOVERY CO₃(NH₄)₂ +
TO EFFLUENT TREAT So₄(NH₄)₂

R-10 from Fig. 2

(NH₄)₂CO₃

D-1   R-1   S-1   R-2   S-2   R-3   S-3   P-8   D-2

P-1   P-2   P-3   P-4   P-5   P-6   P-7   F-1

CO₃Sr

to D-21
Fig. 3

EP 0 495 937 A1

Fig.1

Fig. 2

Fig. 3

# INTERNATIONAL SEARCH REPORT

International Application No PCT/ES 91/00039

| I. CLASSIFICATION OF SUBJECT MATTER (if several classification symbols apply, indicate all) [6] |
|---|

According to International Patent Classification (IPC) or to both National Classification and IPC

$Int.Cl.^5$    C01F 11/18, C01F 11/38, C05C 1/00

| II. FIELDS SEARCHED |
|---|

**Minimum Documentation Searched [7]**

| Classification System | Classification Symbols |
|---|---|
| $Int.Cl.^5$ | C01F, C05C |

Documentation Searched other than Minimum Documentation
to the Extent that such Documents are included in the Fields Searched [8]

| III. DOCUMENTS CONSIDERED TO BE RELEVANT [9] | | |
|---|---|---|
| Category [*] | Citation of Document, [11] with indication, where appropriate, of the relevant passages [12] | Relevant to Claim No. [13] |
| A | ES, A, 2006338 (PHILOPATENT, S.A.) 16 April 1989 see claims 1,3,5,6,7;column 3,line 34 - column 5,line 52 <br> -- | 1-5 |
| A | US, A, 4666688 (F. DE BUDA) 19 May 1987 see claim 1;column 2,lines 21-53 <br> -- | 1,4 |
| A | US, A, 4421729 (J.S. CHIANG et al.) 20 December 1983 see claim 1;column 2,line 26 - column 4,line 25 | 1,4 |
| | -------------- | |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

| IV. CERTIFICATION |
|---|

| Date of the Actual Completion of the International Search | Date of Mailing of this International Search Report |
|---|---|
| 20 September 1991 (20.09.91) | 16 October 1991 (16.10.91) |

| International Searching Authority | Signature of Authorized Officer |
|---|---|
| EUROPEAN PATENT OFFICE | |

Form PCT/ISA/210 (second sheet) (January 1985)